(19) Europäisches Patentamt / European Patent Office / Office européen des brevets

(11) **EP 2 177 741 A1**

(12) **EUROPEAN PATENT APPLICATION**

(43) Date of publication:
**21.04.2010 Bulletin 2010/16**

(51) Int Cl.:
*F02D 41/22* (2006.01)   *F02D 19/02* (2006.01)
*F02D 41/04* (2006.01)

(21) Application number: **08425666.8**

(22) Date of filing: **15.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Magneti Marelli Powertrain S.p.A.**
**28011 Corbetta (IT)**

(72) Inventors:
• **Cavanna, Filippo**
  **40139 Bologna (IT)**
• **Sensi, Fabio**
  **40033 Casalecchio di Reno (IT)**
• **Sgatti, Stefano**
  **4002 Imola (IT)**
• **Garagnani, Nicola**
  **40056 Crespellano (IT)**
• **Lambertini, Loris**
  **40056 Crespellano (IT)**
• **Zanotti, Massimo**
  **40040 Vado (IT)**

(74) Representative: **Bergadano, Mirko et al**
**Studio Torta S.r.l.**
**Via Viotti, 9**
**10121 Torino (IT)**

(54) **Method for diagnosing a gaseous fuel feeding system for an internal combustion engine**

(57)    A method for diagnosing a gaseous fuel feeding circuit (2) in an internal combustion engine (1); the feeding circuit (2) is provided with a gaseous fuel tank (5), a high-pressure branch (3) which is fed directly by the tank (5), a low-pressure branch (4), and a pressure reducer (8) interposed between the high-pressure branch (3) and the low-pressure branch (4); the diagnostic method includes the steps of reading the current value of a number of characteristic magnitudes of the gaseous fuel present in the feeding circuit (2) during the normal operation of the internal combustion engine (1); diagnosing the presence of a fault of the feeding circuit (2) by using the current value of the characteristic magnitudes of the gaseous fuel present in the feeding circuit (2) during the normal operation of the internal combustion engine (1); determining the expected value of at least one diagnostic parameter during a step of designing and developing; calculating the current value of the diagnostic parameter by using the current value of the characteristic magnitudes of the gaseous fuel present in the feeding circuit (2) during the normal operation of the internal combustion engine (1); comparing the expected value and the current value of the diagnostic parameter during the normal operation of the internal combustion engine (1); and diagnosing the presence of a fault in the feeding circuit (2) when the expected value of the diagnostic parameter is significantly different from the current value, during the normal operation of the internal combustion engine (1).

EP 2 177 741 A1

**Description**

TECHNICAL FIELD

The present invention relates to a method for diagnosing a gaseous fuel feeding system for an internal combustion engine.

BACKGROUND ART

Internal combustion engines running on two fuels, the so-called "bi-fuel" engines, are increasingly more frequently applied in some versions of modern motor vehicles present on the market, in which one feeding line of a first fuel, generally gasoline, is arranged by the side of a feeding line of a gaseous fuel, such as, for example, liquefied petroleum gas (LPG) or methane. The switching between the two fuels is safely managed by means of an electronic control unit in a manner which is not perceived by the motor vehicle driver.

The gaseous fuel feeding line comprises a tank, which is filled during the refueling of the motor vehicle with the gaseous fuel at a predetermined pressure, and is provided with a check valve arranged upstream of the tank to prevent fuel backflow. A shut-off valve is instead arranged downstream of the tank, and is adapted to feed the circuit arranged downstream and measure the level of the introduced gaseous fuel by means of specific sensors. A pressure reducer is arranged in the gaseous feeding line, downstream of the shut-off valve, which reducer in addition to reducing the fuel pressure by stabilizing it at an optimal level for feeding the injectors, in the case of liquefied petroleum gas (LPG), for instance, also vaporizes the fuel from liquid state. Furthermore, the pressure reducer is provided with a sensor for detecting the fuel pressure. After having been subjected to pressure reduction, the gaseous fuel is conveyed into a low-pressure common rail which feeds a plurality of injectors, each of which injects the gaseous fuel into a cylinder. The low-pressure common rail is also provided with a sensor for detecting the gaseous fuel temperature and pressure. By means of the signals received from the various sensors on the gaseous fuel feeding line, the electronic control unit manages the opening of the injectors thus calculating the times and amounts of fuel to be injected.

The gaseous fuel feeding circuit may thus be divided into a first high-pressure branch and a second low-pressure branch, in which the gaseous fuel pressure undergoes a considerable reduction due to the action of the pressure reducer. Leakages may occur in both branches of the feeding circuit from the pipes in which the gaseous fuel circulates, or the various valves in the circuit may clog up and cause the jamming of the valve itself. Both these malfunctions, i.e. leakages of gaseous fuel from the pipes and jamming of the valves, may be potentially very dangerous and must be recognized as soon as possible. When a malfunction is detected, the electronic control unit switches from gaseous fuel operation to gasoline operation both to prevent the stopping of the engine and to prevent the gaseous fuel from leaking into the environment; furthermore, when a malfunction is detected, the electronic control unit signals the presence of the fault to the driver and, if necessary, activates recovery strategies to limit the vehicle performances while allowing to complete the travel in progress.

DISCLOSURE OF INVENTION

It is the object of the present invention to provide a method for diagnosing a gaseous fuel feeding system for an internal combustion engine, which is free from the above described drawbacks, allows to increase the safety level of the gaseous fuel feeding system, and is easy and cost-effective to be implemented.

According to the present invention, a method for diagnosing a gaseous fuel feeding system for an internal combustion engine is provided, as disclosed in the appended claims.

BRIEF DESCRIPTION OF THE DRAWINGS

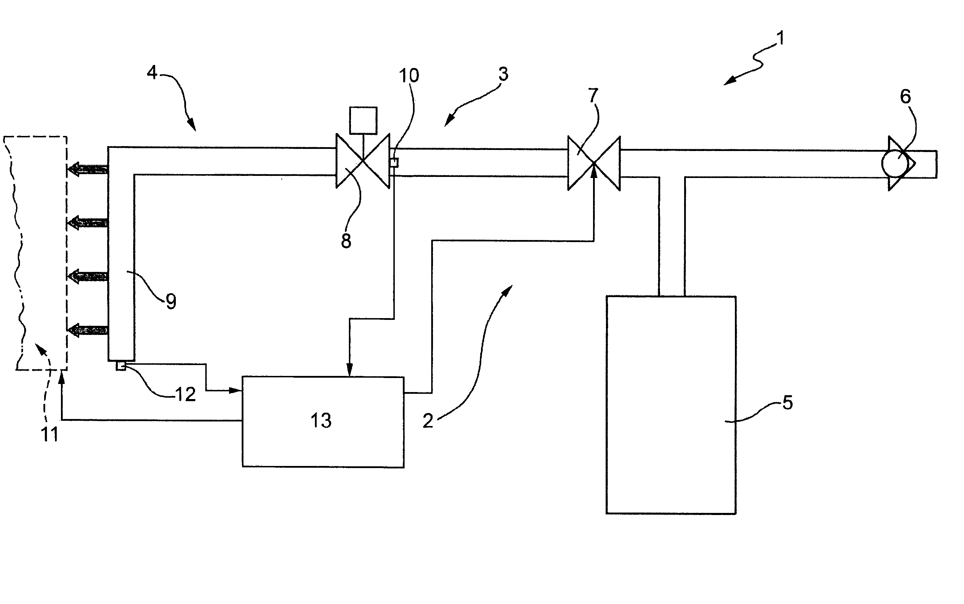

The present invention will now be described with reference to the accompanying drawing which illustrates a non-limitative embodiment thereof; the accompanying figure is a diagrammatic view of a gaseous fuel feeding system of an internal combustion engine in which the diagnosing method of the present invention is implemented.

PREFERRED EMBODIMENTS OF THE INVENTION

In the accompanying figure, numeral 1 indicates as a whole an internal combustion engine for a motor vehicle provided with a feeding circuit 2 of a gaseous fuel, such as, for example, liquefied petroleum gas LPG), methane, or hydrogen. Explicit reference will be made in the following description to the case in which the internal combustion engine 1 is provided with a double fuel feeding (i.e. a so-called "bi-fuel" engine), in which a feeding circuit of a liquid fuel (normally, gasoline) is further arranged by the side of the gaseous fuel feeding circuit 2. However, it is worth emphasizing that the following description may be extended also to the case in which the internal combustion engine 1 is fed with gaseous fuel only.

The gaseous fuel feeding circuit 2 is divided into a high-pressure branch 3 and a low-pressure branch 4, and comprises a tank which is connected to the high-pressure branch 3 and is filled with gaseous fuel at the refueling pump. The tank 5 consists in one or more cylinders arranged in series and is connected to an external refueling socket by means of a refueling pipe provided with a check valve 6 to prevent the gaseous fuel from flowing back outwards.

The high-pressure branch 3 of the feeding circuit 2 comprises a shut-off valve 7, which feeds the high-pressure branch 3 (i.e. it is interposed between the high-pressure branch 3 and the tank 5). The high-pressure branch 3 is connected to a pressure reducer 8, which is interposed between the high-pressure branch 3 and the low-pressure branch 4, and is adapted to reduce the gaseous fuel pressure value to an optimal value for feeding a common injection rail 9 of the low-pressure branch 4. If the gaseous fuel is liquefied petroleum gas (LPG), the pressure reducer 8 will also vaporize the gaseous fuel from liquid state. A pressure sensor 10 is arranged on the pressure reducer 8, which sensor is accommodated so as to face the high-pressure branch 3 of the feeding circuit 2 to detect the gaseous fuel pressure. According to a preferred embodiment, the pressure reducer 8 is, in turn, provided with a shut-off valve, which is synchronously controlled with respect to the shut-off valve 7 arranged at the head of the tank 5, and is adapted to allow to completely separate the low-pressure branch 4 from the high-pressure branch 3.

The common injection rail 9 is controlled by an electronic control unit 13, which is adapted to control the gaseous fuel injection into the cylinders (not shown) of the engine 1 by means of a group of injectors 11. Furthermore, the common injection rail 9 is further provided with a sensor 12 for detecting the temperature and pressure of the gaseous fuel inside the low-pressure branch 4. Specifically, the electronic control unit 13 reads the data supplied by the sensors 10 and 12 arranged along the feeding circuit 2, actuates the shut-off valve 7, and drives the gaseous fuel injectors 11 by calculating times and amounts of gaseous fuel to be injected.

Some algorithms of a control strategy, which have been developed to recognize and implement the diagnosis of possible faults or another anomalous situations in the feeding circuit 2, by monitoring a plurality of parameters which are detected in the feeding circuit 2 itself, are illustrated below. Such algorithms are implemented by the electronic control unit 13, which also provides for implementing possible recovery strategies in case of fault, and managing the switching from one fuel to the other.

All the diagnostic algorithms described below include identifying, in a step of designing and developing, a set of diagnostic parameters P, which are indicative of the state of the feeding circuit 2 and may be easily calculated with an adequate accuracy by using the sensors 10 and 12 normally present in the feeding circuit 2. Furthermore, an expected value of the diagnostic parameter P under normal conditions (i.e. in the absence of faults or other anomalous situations) is determined during the step of designing and developing for each diagnostic parameter P. Obviously, the expected value of each diagnostic parameter P is generally expressed by means of a range to take the inevitable manufacturing tolerances and the measuring errors of the sensors 10 and 12 into account; furthermore, the expected value of each diagnostic parameter P may be either constant or depending on other variables, such as, for example, the external temperature.

During the normal operation of the internal combustion engine 1, the current value of each diagnostic parameter P is calculated by using the current value of the characteristic magnitudes of the gaseous fuel present in the feeding circuit 2, which are provided by the sensors 10 and 12; thus, the expected value and the current value of each diagnostic parameter P are compared and the presence of a fault or other anomalous situation in the feeding circuit 2 is diagnosed when the expected value of each diagnostic parameter P is significantly different from the current value.

The first type of diagnosis which may be implemented relates to the recognition of possible leakages located in the pipes of the high-pressure branch 3 when the electronic control unit 3 is turned on after having been turned off. For this purpose, a diagnostic parameter P1 is used which depends on the pressure variation $\Delta P_{eff}$ inside the high-pressure branch 3 between the electronic control unit 13 turning off and its following turning on; specifically, a leakage in the high-pressure branch 3 is diagnosed if the expected value of the diagnostic parameter P1 is significantly different from the current value.

Preferably, the current value of the diagnostic parameter P1 is calculated according to the pressure variation $\Delta P_{eff}$ inside the high-pressure branch 3 and according to an interval T1 of off-time corresponding to the time interval which elapses between the electronic control unit 13 turning off and and its following turning on.

When turned on, i.e. when the electronic control unit 13 is powered, a first test is run to check for malfunctions of the sensors 10 and 12, and a second test is run to check if it is possible to obtain a reliable estimate of the off-time interval T1, i.e. a reliable estimate of the time interval during which the electronic control unit 13 was turned off, or better of the time interval elapsed between the electronic control unit 13 turning off and its following turning on.

In case there are no malfunctions in the feeding circuit 2, the gaseous fuel pressure in the high-pressure branch 3 may be varied only according to the temperature variation $\Delta T$ in the time interval during which the electronic control unit 13 was off.

After about one second from the electronic control unit 13 turning on, the high-pressure branch 3 of the feeding circuit 2 is diagnosed only once if the test results are positive and thus the estimated off-time interval T1 is deemed reliable.

Three different conditions may occur with regard to the off-time interval T1: in the first case, the estimated off-time T1 is shorter than a threshold value S1 (which is usually of the order of a few minutes), in the second case the estimated off-time T1 is longer than an upper threshold value S2 (which is usually of the order of several hours), while in the third case, the estimated off-time T1 is in the range between the lower S1 and the upper S2 threshold values.

In the first case, i.e. when the off-time T1 is shorter than the lower threshold value S1 (T1 < S1), the current value of the diagnostic parameter P1 is equal to the pressure variation $\Delta P_{eff}$ which results from the difference between the pressure value inside the high-pressure branch 3 before turning off and the pressure value inside the high-pressure branch 3 at the following turning on, i.e.:

$$P1 = \Delta P_{eff} = P_{hp\_off} - P_{hp\_on}$$

$P_{hp\_off}$ pressure value inside the high-pressure branch 3 immediately before the electronic control unit 13 is turned off; and

$P_{hp\_on}$ pressure value inside the high-pressure branch 3 at the following turning on of the electronic control unit 13.

In this case, the expected value of the first diagnostic parameter is equal to the pressure difference in the high-pressure branch 3 solely due to the temperature variation $\Delta T$ which the high-pressure branch 3 underwent during the off-time interval T1.

In an entirely similar manner, in the second case, i.e. when the off-time T1 is longer than the upper threshold value S2 (T1 < S2), the current value of the diagnostic parameter P1 is equal to the difference $\Delta P_{eff}$ between the pressure value inside the high-pressure branch 3 before turning off and the pressure value inside the high-pressure branch 3 at the following turning on, i.e.:

$$P1 = \Delta P_{eff} = P_{hp\_off} - P_{hp\_on}$$

$P_{hp\_off}$ pressure value inside the high-pressure branch 3 immediately before the electronic control unit 13 is turned off; and

$P_{hp\_on}$ pressure value inside the high-pressure branch 3 at the following turning on of the electronic control unit 13.

It is worth emphasizing that above the upper threshold value S2, the temperature effect must be taken into consideration, because the allowable pressure drop threshold varies according to the difference between the temperature when the electronic control unit 13 is turned off and the temperature when the electronic control unit 13 wakes up.

Even in this case, the expected value of the first diagnostic parameter is equal to the pressure difference inside the high-pressure branch 3 solely due to the temperature variation $\Delta T$ which the high-pressure branch 3 underwent during the off-time interval T1.

In the third case, when the off-time T1 is in the range between the lower threshold value S1 and the upper threshold value S2 (S1 < T1 < S2), the current value of the diagnostic parameter P1 is equal to the difference $\Delta P_{eff}$ between the pressure value inside the high-pressure branch 3 before turning off and the pressure value inside the high-pressure branch 3 at the following turning on, related to the off-time interval T1, i.e.:

$$P1 = \Delta P_{eff} / T1 = (P_{hp\_off} - P_{hp\_on}) / T1$$

$P_{hp\_off}$ pressure value inside the high-pressure branch 3 immediately before the electronic control unit 13 is turned off; and

$P_{hp\_on}$ pressure value inside the high-pressure branch 3 at the following turning on of the electronic control unit 13.

In this case, the expected value of the first diagnostic parameter is equal to an acceptable reference value of the average time derivative of the pressure drop in the high-pressure branch 3 while the electronic control unit 13 is off.

It is worth emphasizing that below the lower threshold value S1 it is more convenient to operate with an absolute difference between the pressure values $P_{np\_off}$ and $P_{hp\_on}$ instead of a derivative, so that the result is independent from the off-time interval T1, because possible estimated off-time T1 errors would have an excessively relevant weight in the derivative calculation. Similarly, above the upper threshold value S2, it is more convenient to operate with an absolute difference between the pressure values $P_{hp\_off}$ and $P_{np\_on}$, so that the result is independent from the off-time interval T1, because derivative information sensitivity could be lost.

By means of this first diagnosis, assuming that the high-pressure branch 3 is completely separated when the electronic control unit 13 is turned off, it is possible to check the integrity of the branch 3 itself and verify the presence of leakages from the pipes.

The recovery strategy to be implemented in the case in which the high-pressure branch 3 is not intact, in order to allow the operation under conditions of maximum safety, includes deactivating some electric loads (such as, for example, the conditioner), or stopping the internal combustion engine 1, or no longer allowing to start the internal combustion engine 1 (e.g. by preventing the starter motor from being fed) in order to increase the safety of the motor vehicle.

The second type of diagnosis allows to acknowledge possible leakages located in the pipes of the high-pressure branch 3 when the electronic control unit 13 is powered. For this purpose, a diagnostic parameter P2 is used, which parameter depends on a pressure variation $\Delta P_{eff}$ inside the high-pressure branch 3 during a test time interval T2 of the order of a few hundreds of ms (generally between 100 and 800 ms); specifically, a leakage in the high-pressure branch 3 is diagnosed if the expected value of the second diagnostic parameter P2 is significantly different from the current value.

Once the electronic control unit 13 has been turned on, if the test results are positive, a first instantaneous value $P_{start}$ of the pressure in the high-pressure branch 3 is detected at regular time intervals and at a substantially high frequency (of the order of 12 ms) and a timer is started. Once a second test time interval T2 of pre-settable duration has elapsed, a second instantaneous pressure value $P_{fin}$ in the high-pressure branch 3 is detected.

The current value of the diagnostic parameter P2 is equal to the difference $\Delta P_{eff}$ between the pressure value $P_{start}$ at the beginning of the test time interval T2 and the pressure value $P_{fin}$ at the end of the test time interval T2, i.e.:

$$P2 = \Delta P_{eff} = P_{fin} - P_{start}$$

$P_{start}$ pressure value inside the high-pressure branch 3 at the beginning of the interval T2; and

$P_{fin}$ pressure value inside the high-pressure branch 3 at the end of the interval T2.

If the current value of the diagnostic parameter P2 is higher than the corresponding expected value which indicates the maximum allowable pressure difference under normal conditions, it means that the high-pressure branch 3 is damaged, i.e. there is a leakage.

In this case, recovery operations include switching to liquid fuel operation and preventing future switching to gaseous fuel operation until the damage has been repaired; a minimum time is waited before starting to switch to liquid fuel operation, which time is required to ensure the correct filling of the circuit fed with liquid fuel and to prevent the internal combustion engine 1 from stopping.

After a relatively short time interval, substantially of the order of a few seconds, from the detection of the damage in the high-pressure branch 3 by analyzing the diagnostic parameter P2, the pressure difference $\Delta P_{eff}$ in the high-pressure branch 3 between the start and end instants of a predetermined observation time interval is calculated. If the pressure difference $\Delta P_{eff}$ is lower than a limit value which may be calibrate, it means that the pressure in the branch 3 has stabilized and that a minor size leakage is present, or the leakage is located in a secondary pipe of the high-pressure branch 3; instead, if the pressure difference $\Delta P_{eff}$ is higher than the limit value which may be calibrate, it means that a leakage of considerable size is present and/or that the leakage is located in a primary pipe of the high-pressure branch 3.

Briefly, the second diagnosis based on the diagnostic parameter P2 consists in the continuous detection of the pressure value in the high-pressure branch 3, in order to recognize the arising of a leakage in the high-pressure branch 3 itself in a timely manner.

The third type of diagnosis relates the recognition of possible clogging of the shut-off valve 7 which is arranged at the head of the gaseous fuel tank 5, and the diagnosis is restricted to the only condition in which the gaseous fuel is actually being consumed. For this purpose, a diagnostic parameter P3 is used, which parameter depends on a pressure variation $\Delta P_{eff}$ inside the high-pressure branch 3 during a test time interval T3, generally between 30 and 60 seconds;

specifically, clogging of the shut-off valve 7 is diagnosed if the expected value of the diagnostic parameter P3 is significantly different from the current value. As previously mentioned, the current value of the diagnostic parameter P3 is compared with the corresponding expected value only if gaseous fuel is actually being consumed by the internal combustion engine 1.

After turning on the electronic control unit 13, if the test results are positive, a first instantaneous value $P_{start}$ of the pressure in the high-pressure branch 3 is detected at regular time intervals and at a substantially high frequency, usually of the order of 12 ms, and a timer is started. Once the test time interval T3 has elapsed, a second instantaneous value $P_{fin}$ of the pressure in the high-pressure branch 3 is detected.

The current value of the diagnostic parameter P3 is equal to the difference $\Delta P_{eff}$ between the pressure value $P_{start}$ at the beginning of the test time interval T3 and the pressure value $P_{fin}$ at the end of the test time interval T3, i.e.:

$$P3 = \Delta P_{eff} = P_{fin} - P_{start}$$

$P_{start}$ pressure value inside the high-pressure branch 3 at the beginning of the interval T3; and

$P_{fin}$ pressure value inside the high-pressure branch 3 at the end of the interval T3.

In this case, the expected value of the diagnostic parameter P3 is determined according to the actual consumption of gaseous fuel in the cylinders of the internal combustion engine 1, i.e. according to the amount of gaseous fuel burnt in the cylinders, which is known because it is set by the control strategies of the internal combustion engine 1. Specifically, the expected value of the diagnostic parameter P3 is equal to the pressure difference in the high-pressure branch 3 determined by the consumption of gaseous fuel in the cylinders of the internal combustion engine 1 during the third test time interval T3.

It is worth emphasizing that during a preliminary step of designing and developing, it is possible to determine different threshold values for the difference between the expected value of the diagnostic parameter P3 and the current value of the parameter P3 itself, so as to be able to recognize the complete clogging and different degrees of partial clogging of the shut-off valve 7.

The diagnosis may be implemented with some contrivances also if several tanks 5 are present, such as, for example, in the case in which there is a plurality of gaseous fuel cylinders arranged in series; in this case, each cylinder is provided with a corresponding shut-off valve 7 the clogging of which may be diagnosed.

In this case, the recovery operations include switching to liquid fuel operation and preventing future switching to gaseous fuel operation until the damage has been repaired; a minimum time is waited before starting to switch to liquid fuel operation, time which is required to ensure the correct filling of the circuit fed with the liquid fuel and to avoid the internal combustion engine 1 fom stopping.

The fourth type of diagnosis relates to the recognition of possible leakages located in the pipes of the low-pressure branch 4 or the recognition of possible clogging of the pressure reducer 8 while switching from gasoline operation to gaseous fuel operation. For this purpose, a diagnostic parameter P4 is used, which parameter depends on the pressure inside the low-pressure branch 4 after a test time interval T4 from an instant of switching to gaseous fuel operation. Specifically, a leakage in the low-pressure branch 4 or a clogging of the pressure reducer 8 is diagnosed if the expected value of the diagnostic parameter P4 is significantly different from the current value.

The expected value of the diagnostic parameter P4 is the expected pressure value of the gaseous fuel in the low-pressure branch 4 after the test time interval T4 which is sufficient to ensure the filling of the low-pressure branch 4 itself and is determined according to some known parameters, such as, for example, the geometry of the low-pressure branch 4 and the gaseous fuel pressure value upstream of the pressure reducer 8.

During the step of switching, after the test time interval T4 from the instant of switching has been waited for, which is sufficient to ensure a correct filling of the gaseous fuel feeding circuit 2, the correct value of the diagnostic parameter P4, which is equal to the pressure $P_{start}$ inside the low-pressure branch 4 of the feeding circuit 2, is detected. This test is run only once, at the beginning of the step of switching and two conditions may occur: in the first case, the current value of the diagnostic parameter P4 (i.e. the pressure $P_{start}$ measured in the low-pressure branch 4) is lower than the expected value, while in the second case the current value of the diagnostic parameter P4 (i.e. the pressure $P_{start}$ measured in the low-pressure branch 4) is higher than the expected value.

In the second case, i.e. in the case in which no malfunctions are present, the diagnostic strategy simply includes continuing with the switching procedure to a gaseous fuel operation; in the first case, instead, the presence of a generic fault is signaled in the low-pressure branch 4 and the continuance of the switching procedure to gaseous fuel operation is inhibited. It is worth emphasizing that, in this type of diagnosis, the location of the leakage may not be determined in the low-pressure branch 4, i.e. it is not possible to distinguish between the arasing of a leakage due to a puncture in one of the low-pressure branch pipes 4, which would imply a temporary, partially filling of the low-pressure branch 4 and a subsequent, sudden emptying of the branch itself 4, and the arising of a lack of appropriate gaseous fuel feed caused by a clogging of the pressure reducer 8 arranged at the head of the low-pressure branch 4.

In this case, the recovery operations include, on one hand, switching to liquid fuel operation, even if a proper transition does not occur because the liquid fuel is still used during this step and, on the other hand, preventing future switching to gaseous fuel operation until the damage has been repaired; a minimum time is waited before starting to switch to liquid operation, which time is required for ensuring a correct filling of the circuit fed with the liquid fuel and avoiding the internal combustion engine 1 from stopping.

The fifth type of diagnosis allows to recognize possible leakages located in the pipes of the low-pressure branch 4 when the electronic control unit 13 is fed in a manner similar to that described above with reference to the diagnostic parameter P2 and to the high-pressure branch 3. For this purpose, a diagnostic parameter P5 is used, which parameter depends on a pressure variation $\Delta P_{eff}$ inside the low-pressure branch 4 during a test time interval T5, generally of the order of a few hundreds of ms; specifically, a leakage in the low-pressure branch 4 is diagnosed if the expected value of the diagnostic parameter P5 is significantly different from the current value.

After turning on the electronic control unit 13, if there are no faults in sensors 10 and 12 and if gaseous fuel is in use, a first instantaneous value $P_{start}$ of the pressure in the low-pressure branch 4 is detected at regular time intervals and at a substantially high frequency of the order of 12 ms, and a timer is started.

Once the pre-settable test time interval T5 has elapsed, usually of the order of a few hundreds of ms, a second instantaneous value $P_{fin}$ of the pressure in the low-pressure branch 4 is detected.

The current value of the diagnostic parameter P5 is equal to the difference $\Delta P_{eff}$ between the pressure value $P_{start}$ at the beginning of the test time interval T5 and the pressure value $P_{fin}$ at the end of the test time interval T5, i.e.:

$$P5 \; = \; \Delta P_{eff} = \; P_{fin} \; - \; P_{start}$$

$P_{start}$ pressure value inside the low-pressure branch 4 at the beginning of the interval T5; and

$P_{fin}$ pressure value inside the high-pressure branch 4 at the end of the interval T5.

If the current value of the diagnostic parameter P5 is higher than the corresponding expected value which indicates the maximum allowable pressure difference under normal conditions, it means that the low-pressure branch 4 is damaged, i.e. there is a leakage. In this case, the recovery operations include switching to liquid fuel operation and preventing future switching to gaseous fuel until the damage has been repaired; a minimum time is waited before starting to switch to liquid fuel operation, which time is required to ensure the correct filling of the circuit fed with the liquid fuel and to avoid the internal combustion engine 1 from stopping.

Briefly, the diagnosis based on the diagnostic parameter P5 consist in the continuous detection of the pressure value in the low-pressure branch 4, in order to recognize the arising of a leakage in the low-pressure branch 4 itself in a timely manner.

The sixth type of diagnosis relates to the recognition of possible clogging of the pressure reducer 8 which is arranged at the head of the low-pressure branch 4. For this purpose, a diagnostic parameter P6 is used, which parameter depends on a variation $\Delta P_{eff}$ of the pressure inside the low-pressure branch 4 during a test time interval T6, of the order of a few tens of seconds (generally between 10 and 30 ms); specifically, a clogging in the pressure reducer 8 is diagnosed if the expected value of the diagnostic parameter P6 is significantly different from the current value. It is worth emphasizing that when choosing the duration of the test time interval T6, the fact that a possible clogging of the pressure reducer 8 may be recognized in relatively short time intervals is taken into account, because the low-pressure branch 4 has a considerably lower capacity than the tank 5 and is emptied more rapidly than the high-pressure branch 3.

In this case, the recovery operations include switching to liquid fuel operation and preventing future switching to gaseous fuel operation until the damage has been repaired; a minimum time is waited before starting to switch to liquid fuel operation, which time is required to ensure the correct filling of the circuit fed with the liquid fuel and to avoid the internal combustion engine 1 from stopping.

After turning on the electronic control unit 13, if the test results are positive, a first instantaneous value $P_{start}$ of the pressure in the low-pressure branch 4 is detected at regular time intervals and at a substantially high frequency, of the order of 12 ms, and a timer is started. Once the test time interval T6 has elapsed, a second instantaneous value $P_{fin}$ of the pressure in the low-pressure branch 4 is detected.

The current value of the diagnostic parameter P6 is equal to the difference $\Delta P_{eff}$ between the pressure value $P_{start}$ at the beginning of the test time interval T6 and the pressure value $P_{fin}$ at the end of the test time interval T6, i.e.:

$$P6 = \Delta P_{eff} = P_{fin} - P_{start}$$

$P_{start}$ pressure value inside the low-pressure branch 4 at the beginning of the interval T6; and

$P_{fin}$ pressure value inside the high-pressure branch 4 at the end of the interval T6.

In this case, the expected value of the diagnostic parameter P6 is determined according to the temperature variation and to the actual consumption of gaseous fuel in the cylinders of the internal combustion engine 1, i.e. according to the amount of gaseous fuel burnt in the cylinders which is known because it is set by the control strategies of the internal combustion engine 1. Specifically, the expected value of the diagnostic parameter P6 is equal to the pressure difference in the low-pressure branch 4 determined on the basis of the temperature variation and gaseous fuel consumption in the cylinders of the internal combustion engine 1 during the test time interval T6.

In this case, the recovery operations include switching to liquid fuel operation and preventing future switching to gaseous fuel operation until the damage has been repaired; a minimum time is waited before starting to switch to liquid fuel operation, which time is required to ensure the correct filling of the circuit fed with the liquid fuel and to avoid the internal combustion engine 1 from stopping. It is worth emphasizing that this type of diagnosis, despite providing a timely recognition of possible clogging of the pressure reducer 8, is not however generally sufficient to prevent the internal combustion engine 1 from stopping when switching to liquid fuel operation.

The seventh type of diagnosis relates to the recognition of the filling operation of tank 5 with the gaseous fuel, if refueling is carried out having the key in and the electronic control unit 13 powered. For this purpose, a diagnostic parameter P7 is used, which parameter depends on a variation $\Delta P_{eff}$ of the pressure inside a high-pressure branch 3 during the test time interval T7, between 2 and 8 seconds. Specifically, a refueling operation of the gaseous fuel is diagnosed if the expected value of the diagnostic parameter P7 is significantly different from the current value and the pressure inside the high-pressure branch 3 increases over time.

In the case in which no faults are detected in sensors 10 and 12, a first instantaneous value $P_{start}$ of the pressure in the high-pressure branch 3 is detected at regular time intervals and at a substantially high frequency, usually of the order of 12 ms, and a timer is started. A second instantaneous value $P_{fin}$ of the pressure in the high-pressure branch 3 is detected after the test time interval T7 of relatively short, pre-settable duration, usually between 2 and 8 seconds, has elapsed.

The current value of the diagnostic parameter P7 is equal to the difference $\Delta P_{eff}$ between the pressure value $P_{start}$ at the beginning of the test time interval T7 and the pressure value $P_{fin}$ at the end of the test time interval T7, i.e.:

$$P7 = \Delta P_{eff} = P_{fin} - P_{start}$$

$P_{start}$ pressure value inside the high-pressure branch 3 at the beginning of the interval T7; and

$P_{fin}$ pressure value inside the high-pressure branch 3 at the end of the interval T7.

In order to allow to operate under conditions of maximum safety, the recovery strategy to be implemented in the case the gaseous fuel refueling operation is recognized, includes deactivating some electric loads, such as for example the conditioner, or stopping the internal combustion engine 1, or no longer allowing to start the internal combustion engine 1 (e.g. by preventing the starter motor from being fed).

The illustrated strategy thus includes defining a high number of variables which may be defined by the user during the step of designing, such as, for example, the initial pressure of the tank 5, the pressure in the high-pressure branch 3 and in the low-pressure branch 4, the passage section of the shut-off valve 7, the possibility of blocking the shut-off valve 7 and/or the pressure reducer 8, the circuit temperature, which may be considered homogenous for simplicity, etc.

The diagnostic strategy herein described has many advantages, because it allows a more rational use of the gaseous fuel, and a reduction of waste and possible polluting emissions; furthermore, it allows to recognize the presence of a leakage inside both the high-pressure branch 3 and the low-pressure branch 4 of the gaseous fuel feeding circuit 2, by estimating the size, locating it and producing a reaction by the electronic control unit 13 which governs the internal combustion engine 1, such as to increase the level of safety and which, to the greatest possible extent, prevents the internal combustion engine 1 from stopping.

The strategy further allows to recognize the presence of clogging of the shut-off valve 7 for adjusting the flow exiting the tank 5 and entering into the gaseous fuel feeding circuit 2, or at the pressure reducer 8 which delimits the passage between the high 3 and the low 4 pressure branchs by estimating the entity thereof and producing a reaction by the electronic control unit 13 which, for the greatest possible extent, prevents the engine itself from stopping.

Finally it allows to recognize a refueling operation and to consequently produce a reaction by the electronic control unit 13 for increasing the level of safety and deactivating all active electric loads.

In conclusion, the implementation of the above-described diagnostic algorithms of control strategy allows to increase driving safety and comfort, allowing to prevent untimely switching from one fuel to the other and stopping of the internal combustion engine 1 due to the non-recognition of possible faults.

**Claims**

1. A method for diagnosing a gaseous fuel feeding circuit (2) in an internal combustion engine (1); the feeding circuit (2) comprises a gaseous fuel tank (5), a high-pressure branch (3) which is fed directly by the tank (5), a low-pressure branch (4), and a pressure reducer (8) interposed between the high-pressure branch (3) and the low-pressure branch (4); the diagnostic method comprises the steps of:

   reading the current value of a number of characteristic magnitudes of the gaseous fuel present in the feeding circuit (2) during the normal operation of the internal combustion engine (1); and
   diagnosing the presence of a fault or other anomalous situation of the feeding circuit (2) by using the current value of the characteristic magnitudes of the gaseous fuel present in the feeding circuit (2) during the normal operation of the internal combustion engine (1);
   the diagnostic method is **characterized in that** it comprises the further steps of:
   determining the expected value of at least one diagnostic parameter during a step of designing and developing;
   calculating the current value of the diagnostic parameter by using the current value of the characteristic magnitudes of the gaseous fuel present in the feeding circuit (2) during the normal operation of the internal combustion engine (1);
   comparing the expected value and the current value of the diagnostic parameter during the normal operation of the internal combustion engine (1); and
   diagnosing the presence of a fault or other anomalous situation in the feeding circuit (2) when the expected value of the diagnostic parameter is significantly different from the current value, during the normal operation of the internal combustion engine (1).

2. A method according to claim 1, wherein:

   the current value of a first diagnostic parameter (P1) is calculated according to a pressure variation ($\Delta P_{eff}$) inside the high pressure branch (3) between a turning off of electronic control unit (13) of the feeding circuit (2) and its following turning on; and
   a leakage is diagnosed in the high-pressure branch (3) if the expected value of the first diagnostic parameter (P1) is significantly different from the current value.

3. A method according to claim 2 and comprising the further step of calculating the current value of the first diagnostic parameter (P1) according to the variation ($\Delta P_{eff}$) of pressure inside the high-pressure branch (3) and according to a first off-time interval (T1) corresponding to the time interval which elapses between the turning off of electronic control unit (13) of the feeding circuit (2) and its turning on.

4. A method according to claim 3, wherein the expected value of the first diagnostic parameter (P1) depends on the temperature difference which occurs between the turning off of the electronic control unit (13) of the feeding circuit (2) and its turning on.

5. A method according to claim 3 or 4, wherein the current value of the first diagnostic parameter (P1) is calculated using the following equations:

$$P1 = \Delta P_{eff} = P_{hp\_off} - P_{hp\_on} \text{ when } T1 < S1$$

$$P1 = \Delta P_{eff} / T1 = (P_{hp\_off} - P_{hp\_on}) / T1 \text{ when } S1 < T1 < S2$$

$$P1 = \Delta P_{eff} = P_{hp\_off} - P_{hp\_on} \text{ when } T1 > S2$$

P1 is the current value of the first diagnostic parameter;
$\Delta P_{eff}$ is the pressure variation inside the high-pressure branch (3);
$P_{hp\_off}$ is the value of the pressure inside the high-pressure branch (3) immediately before the electronic control unit (13) of the feeding circuit (2) is turned off;
$P_{hp\_on}$ is the value of the pressure inside the high-pressure branch (3) at the following turning on of the electronic control unit (13) of the feeding circuit (2);
T1 is the first off-time interval;
S1 is a lower threshold; and
S2 is a upper threshold.

6. A method according to claim 5, wherein:

if the first off-time interval (T1) is shorter than the lower threshold (S1) or if the first off-time interval (T1) is longer than the upper threshold (S2), the expected value of the first diagnostic parameter (P1) is equal to the pressure difference inside the high-pressure branch (3) solely due to the temperature variation ($\Delta T$) which the high-pressure branch (3) underwent during the first off-time interval (T1); and
if the first off-time interval (T1) is between the lower threshold (S1) and the upper threshold (S2), the expected value of the first diagnostic parameter (P1) is equal to an acceptable reference value for the average time derivative of the pressure drop in the high-pressure branch (3).

7. A method according to anyone of the claims from 1 to 6, wherein:

the current value of a second diagnostic parameter (P2) is calculated according to a pressure variation ($\Delta P_{eff}$) inside the high-pressure branch (3) during a second test time interval (T2) between 100 and 800 ms; and
a leakage is diagnosed in the high-pressure branch (3) if the expected value of the second diagnostic parameter (P2) is significantly different from the current value.

8. A method according to claim 7, wherein a size of the leakage in the high-pressure branch (3) is estimated according to the entity of the pressure variation ($\Delta P_{eff}$).

9. A method according to claim 8, wherein if the pressure variation ($\Delta P_{eff}$) is higher than a threshold value, then it is diagnosed that the leakage is of considerable size and/or is located in a main pipe of the high-pressure (3).

10. A method according to anyone of the claims from 1 to 9, wherein:

the current value of a third diagnostic parameter (P2) is calculated according to a pressure variation ($\Delta P_{eff}$) inside the high-pressure branch (3) during a third test time interval (T3) between 30 and 60 seconds; and
a clogging of a shut-off valve (7) is diagnosed, which valve is interposed between the gaseous fuel tank (5) and the high-pressure branch (3), if the expected value of the third diagnostic parameter (P3) is significantly different from the current value.

11. A method according to claim 10, wherein the current value of the third diagnostic parameter (P3) is compared with the corresponding expected value only if the gaseous fuel is actually being consumed by the internal combustion engine (1).

12. A method according to claim 10 or 11, wherein the expected value of the third diagnostic parameter (P3) is determined according to the actual consumption of gaseous fuel in the cylinders of the internal combustion engine (1) and is equal to the pressure difference in the high-pressure branch (3) determined by the consumption of gaseous fuel in the cylinders of the internal combustion engine (1) during the third test time interval (T3).

13. A method according to anyone of the claims from 10 to 12, wherein different clogging degrees of the shut-off valve (7) correspond to different values of the difference between the expected value of the third diagnostic parameter (P3) and the current value of the third diagnostic parameter (P3) for recognizing both a complete clogging and a partial clogging of said shut-off valve (7).

14. A method according to anyone of the claims from 1 to 13, wherein:

the current value of a fourth diagnostic parameter (P4) is equal to the value of the pressure inside the low-pressure branch (4) after a test time interval (T4) from an instant of switching to gaseous fuel operation; and a leakage in the low-pressure branch (4) or a clogging of the pressure reducer (8) is diagnosed if the expected value of the fourth diagnostic parameter (P4) is significantly different from the current value.

15. A method according to claim 14, wherein the expected value of the fourth diagnostic parameter (P4) depends on the value of the pressure present in the high-pressure branch (3).

16. A method according to anyone of the claims from 1 to 15, wherein:

the current value of a fifth diagnostic parameter (P5) is calculated according to a pressure variation ($\Delta P_{eff}$) inside the low-pressure branch (4) during a fifth test time interval (T5) between 2 and 8 seconds; and a leakage is diagnosed in the low-pressure branch (4) if the expected value of the fifth diagnostic parameter (P5) is significantly different from the current value.

17. A method according to anyone of the claims from 1 to 16, wherein:

the current value of a sixth diagnostic parameter (P6) is calculated according to a pressure variation ($\Delta P_{eff}$) inside the low-pressure branch (4) during a sixth test time interval (T6) between 10 and 30 seconds; and a clogging of the pressure reducer (8) is diagnosed if the expected value of the sixth diagnostic parameter (P6) is significantly different from the current value.

18. A method according to claim 17, wherein the expected value of the sixth diagnostic parameter (P6) is determined according to the actual consumption of gaseous fuel in the cylinders of the internal combustion engine (1) and is equal to the pressure difference in the low-pressure branch (4) determined by the consumption of gaseous fuel in the cylinders of the internal combustion engine (1) during the sixth test time interval (T6).

19. A method according to claim 18, wherein the expected value of the sixth diagnostic parameter (P6) is also determined according to the temperature variation which occurs in the low-pressure branch (4) between the start instant and the end instant of the sixth test time interval (T6).

20. A method according to anyone of the claims from 1 to 19, wherein:

the current value of a seventh diagnostic parameter (P7) is calculated according to a pressure variation ($\Delta P_{eff}$) inside the high-pressure branch (3) during a seventh test time interval (T7) between 2 and 8 seconds; and a refueling operation of the gaseous fuel is diagnosed if, while an electronic control unit (13) of the feeding circuit (2) is turned on, the expected value of the seventh diagnostic parameter (P7) is significantly different from the current value and the pressure inside the high-pressure branch (3) increases over time.

21. A method according to claim 20 and comprising the further step of deactivating all the electric loads during a refueling operation of the gaseous fuel.

**Europäisches Patentamt**
**European Patent Office**
**Office européen des brevets**

# EUROPEAN SEARCH REPORT

Application Number

EP 08 42 5666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 002752 A1 (DAIMLER CHRYSLER AG [DE]) 22 November 2007 (2007-11-22) * abstract; figures 1,2 * | 1-13,16, 17 | INV. F02D41/22 F02D19/02 |
| Y | * paragraphs [0006] - [0009], [0014], [0019] - [0047] * ----- | 20,21 | ADD. F02D41/04 |
| X | JP 2003 003909 A (SUZUKI MOTOR CO) 8 January 2003 (2003-01-08) * abstract * ----- | 1-9 | |
| X | US 5 632 250 A (KATO ATSUSHI [JP] ET AL) 27 May 1997 (1997-05-27) * abstract; figure 2 * * column 3, line 1 - column 4, line 31 * * column 8, line 34 - column 12, line 20 * ----- | 1,7-13, 16-19 | |
| X | WO 2007/042388 A (BOSCH GMBH ROBERT [DE]; ALLGEIER THORSTEN [DE]; LANGER WINFRIED [DE];) 19 April 2007 (2007-04-19) * page 2, line 6 - page 4, line 8 * * page 4, line 17 - page 7, line 35 * ----- | 1,7-10, 13-16 | |
| | | | TECHNICAL FIELDS SEARCHED (IPC) |
| X | DE 102 15 906 A1 (BAYERISCHE MOTOREN WERKE AG [DE]) 23 October 2003 (2003-10-23) * abstract * * paragraphs [0012] - [0016], [0027] - [0036] * ----- | 1,14,16, 17 | F02D F02M |
| X | US 6 467 466 B1 (MAEKAWA MASAHIRO [JP] ET AL) 22 October 2002 (2002-10-22) * abstract; figure 1 * | 1,7-10, 13,16,17 | |
| Y | * column 1, line 48 - column 2, line 10 * * column 3, line 51 - column 4, line 57 * ----- -/-- | 11,12, 18,19 | |

The present search report has been drawn up for all claims

| Place of search | Date of completion of the search | Examiner |
|---|---|---|
| The Hague | 7 April 2009 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 42 5666

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 401 698 B1 (YAMAZAKI HIDEHARU [JP] ET AL) 11 June 2002 (2002-06-11)<br>* column 2, lines 11-39 *<br>* column 8, line 17 - column 10, line 9 *<br>----- | 1,7-10 | |
| X | JP 08 277750 A (NISSAN MOTOR) 22 October 1996 (1996-10-22)<br>* abstract * | 1,7 | |
| Y | | 11,12, 18,19 | |
| Y | FR 2 817 589 A (RENAULT [FR]) 7 June 2002 (2002-06-07)<br>* page 9, lines 28-33 *<br>----- | 20,21 | |

TECHNICAL FIELDS
SEARCHED (IPC)

The present search report has been drawn up for all claims

| Place of search | Date of completion of the search | Examiner |
|---|---|---|
| The Hague | 7 April 2009 | Libeaut, Laurent |

EPO FORM 1503 03.82 (P04C01)

**ANNEX TO THE EUROPEAN SEARCH REPORT
ON EUROPEAN PATENT APPLICATION NO.**

EP 08 42 5666

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2009

| Patent document cited in search report | | Publication date | Patent family member(s) | | Publication date |
|---|---|---|---|---|---|
| DE 102007002752 | A1 | 22-11-2007 | NONE | | |
| JP 2003003909 | A | 08-01-2003 | JP | 4055107 B2 | 05-03-2008 |
| US 5632250 | A | 27-05-1997 | NONE | | |
| WO 2007042388 | A | 19-04-2007 | DE 102005048456 A1 | | 12-04-2007 |
| DE 10215906 | A1 | 23-10-2003 | NONE | | |
| US 6467466 | B1 | 22-10-2002 | JP | 3432458 B2 | 04-08-2003 |
| | | | JP | 2001041106 A | 13-02-2001 |
| US 6401698 | B1 | 11-06-2002 | JP | 2000274311 A | 03-10-2000 |
| JP 8277750 | A | 22-10-1996 | JP | 3480108 B2 | 15-12-2003 |
| FR 2817589 | A | 07-06-2002 | NONE | | |

EPO FORM P0459

For more details about this annex : see Official Journal of the European Patent Office, No. 12/82